# FASCICULE DE BREVET EUROPEEN

(11) **EP 2 563 616 B1**
(45) Date de publication et mention de la délivrance du brevet: **03.05.2017**
(21) Numéro de dépôt: 11715992.1
(22) Date de dépôt: 25.03.2011
(51) Int. Cl.: B60N 2/015, B60N 2/06

(54) **GLISSIERE DE SIEGE DE VEHICULE**
SCHIENE FÜR EINEN FAHRZEUGSITZ
VEHICLE SEAT RUNNER

(30) Priorité: 28.04.2010 FR 1053285
(43) Date de publication de la demande: 06.03.2013
(73) Titulaire: Peugeot Citroën Automobiles SA, 78140 Vélizy Villacoublay (FR)
(72) Inventeur: LEBRETON, Pierre, F-94300 Vincennes (FR)
(86) Numéro de dépôt international: PCT/FR2011/050640
(87) Numéro de publication internationale: WO 2011/135219

(56) Documents cités:
- WO-A1-97/08010
- DE-C1- 4 017 706
- US-A- 4 927 201
- US-B1- 6 254 163

## Description

La présente invention concerne de manière générale une glissière de siège de véhicule apte à être montée sur un véhicule automobile.

Il est connu dans l'art antérieur des glissières de siège de véhicule permettant le réglage de la position longitudinale du siège dans le véhicule par translation du siège dans les glissières. De telles glissières sont généralement assemblées au nombre de deux sur le siège, le sous ensemble siège-glissières étant ensuite livré à l'usine du constructeur automobile, où le sous ensemble siège-glissières sera monté et fixé sur le véhicule. L'assemblage se fait généralement par vissage de vis au travers de trous de fixation ménagés à cet effet dans les glissières. Les écrous de fixation correspondants sont implantés sur la caisse du véhicule. On sait que les procédés de fabrication du siège, des glissières et de la caisse du véhicule engendrent des variations des dimensions de fabrication, ce qui implique de concevoir des systèmes aptes à rattraper les tolérances dimensionnelles inhérentes à la fabrication. Les trous de passage des vis de fixation sont agencés dans les parties profilées des glissières, de sorte que le débattement des têtes de vis est limité par le profilé des glissières, notamment dans le sens transversal à l'axe de translation du siège. Il est à noter que ces glissières présentent généralement un trou allongé dans l'axe de la glissière, i.e. le sens de translation car dans ce sens, le débattement des têtes de vis n'est pas limité par les profilés. Pour compenser les tolérances dimensionnelles, transversalement à l'axe de translation des glissières, il est connu d'utiliser un système d'écrous flottants dans la caisse du véhicule. Ces écrous flottants consistent en de simples écrous de fixation qui sont enfermés dans une cage située dans le plancher du véhicule. Un jeu prédéterminé est calculé entre l'écrou et la cage afin que l'écrou puisse bouger d'une valeur correspondante aux tolérances dimensionnelles de fabrication du siège, des glissières et de la caisse du véhicule. Ce système permet l'interchangeabilité du siège avec la caisse du véhicule pour ne pas avoir à apparier les pièces entre elles.

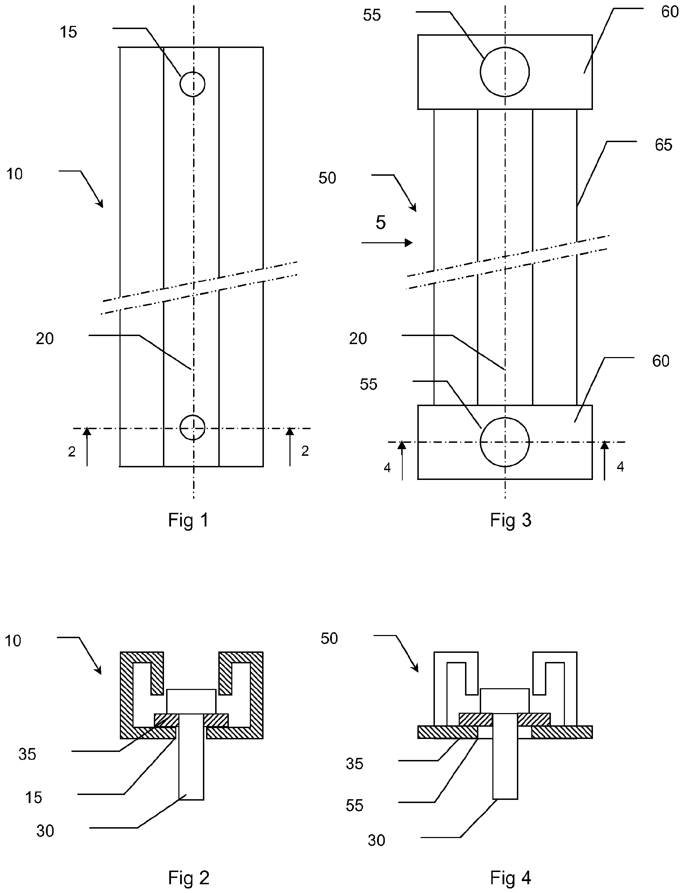

La figure 1 représente la partie fixée au véhicule d'une glissière classique 10, vue de dessus. L'axe de translation 20 est orienté dans le sens de la longueur de la glissière 10. Deux trous 15 de fixation de la glissière 10 sont agencés à chaque extrémité de la glissière.

La coupe 2-2 de la figure 1 représente la partie fixée au véhicule de la glissière 10 vue de face. Une vis 30 de fixation est aussi représentée, ainsi qu'une rondelle d'appui 35. L'axe du trou 15 de passage de la vis 30 est positionné dans le plan de symétrie de la glissière, pour permettre le passage de la vis de fixation 30. On voit malgré cela que la tête de la vis 30 ne dispose pas d'un espace de débattement suffisant. En effet, le profilé de la glissière 10 est agencé de telle sorte que le débattement de la tête de la vis 30, transversalement à l'axe de translation de la glissière 10 est réduit et ne permet pas de rattraper les tolérances dimensionnelles de fabrication du siège, de la glissière et de la caisse du véhicule.

Les glissières sus décrites sont simples, mais en contrepartie, le système d'écrou flottant palliant à l'absence de possibilité de compensation du jeu transversalement à l'axe de translation, présente notamment l'inconvénient d'être complexe. En effet, la réalisation de la cage nécessite une conception de la caisse complexe, car la cage a des dimensions plus importantes que l'écrou seul. Ainsi, l'implantation de la cage dans le plancher accroît les contraintes lors de la conception. En effet, il faut prévoir des emplacements d'implantation plus importants que ceux que nécessiterait un simple écrou. Les cages elles mêmes sont plus complexes, dans la mesure où il faut enfermer un écrou dans un boîtier en tôle tout en garantissant un mouvement de compensation du jeu pour l'écrou. Les coûts de fabrication sont donc plus élevés qu'avec un écrou seul.

On connaît notamment du document US6254163, un système de fixation de siège à glissières conforme au préambule de la revendication 1.

Ce système nécessite l'ajout d'un élément supplémentaire déformable pour rattraper les tolérances dimensionnelles de fabrication, transversalement à l'axe de translation de la glissière.

Un but de la présente invention est de répondre aux inconvénients de l'art antérieur mentionnés ci-dessus et en particulier, tout d'abord, de fournir une glissière simple pour siège de véhicule permettant une compensation des tolérances de fabrication du siège, des glissières et de la caisse, transversalement à l'axe de translation de la glissière, une telle glissière évitant de devoir recourir à des systèmes supplémentaires complexes du type système d'écrou flottant.

Pour cela un premier aspect de l'invention concerne une glissière pour siège de véhicule conforme à la partie caractérisante de la revendication 1.

De manière avantageuse, la partie de la glissière fixée au véhicule est fabriquée à partir d'un flan de tôle, et les zones de fixation sont obtenues directement à partir du flan de tôle utilisé pour fabriquer la glissière. La partie de la glissière fixée au véhicule est fabriquée à partir d'un seul flan de tôle et il n'y a aucune pièce assemblée ultérieurement à cette partie de la glissière. Le procédé de fabrication de cette partie de la glissière n'est donc pas modifié et il n'y a aucune opération supplémentaire ni pièce ajoutée. On offre donc la possibilité de compenser les tolérances de fabrication, transversalement à l'axe de translation, sans augmenter le coût de fabrication de la glissière.

Ainsi, une telle glissière permet d'être fixée sur le plancher du véhicule sans avoir à prévoir de système rattrapant les tolérances dimensionnelles de fabrication, transversalement à l'axe de translation de la glissière. Le plancher du véhicule est alors simplifié et les coûts de fabrication de la caisse du véhicule seront réduits.

De manière avantageuse, les moyens de fixation sont des vis et des écrous, les zones de fixation comportent au moins deux trous permettant la fixation par lesdites vis, et agencés pour être en regard des écrous de fixation implantés à des positions prédéterminées sur le plancher du véhicule, les trous de fixation sont dimensionnés pour compenser, transversalement à l'axe de translation de la glissière, les tolérances dimensionnelles de fabrication du siège et de positionnement desdits écrous, et les zones de fixation de la glissière permettent le débattement, transversalement à l'axe de translation la glissière, des têtes des vis de fixation provoqué par les tolérances dimensionnelles de fabrication du siège et de positionnement desdits écrous. Dans le cadre d'une fixation par vis - écrou du siège sur le plancher du véhicule, le recours aux écrous flottants n'est plus nécessaire. De simples écrous fixés directement sur la caisse du véhicule suffisent à fixer le siège. La conception de la caisse est simplifiée grâce à ce mode de réalisation des glissières.

De manière avantageuse, la glissière comporte des zones profilées, et les zones de fixation des glissières sont des zones planes situées en dehors des zones profilées des glissières. Cet agencement permet d'éviter d'avoir à modifier le profil de la glissière ou les têtes de vis pour laisser une possibilité de débattement aux têtes de vis de fixation du siège, transversalement à l'axe de translation de la glissière.

De préférence, les zones profilées définissent une gouttière ouverte vers le haut au fond de laquelle les têtes de vis n'auraient pas de débattement transversal si les zones de fixation étaient situées dans les zones de profilé, c'est-à-dire si les zones de profilé s'étendaient jusqu'aux zones de fixation.

Les moyens de fixation consistent avantageusement en simples vis, écrous et rondelles plates, sans autre pièce de forme plus complexe.

De manière avantageuse, les zones de fixation sont dimensionnées et agencées pour compenser dans la direction axiale de la glissière les tolérances dimensionnelles de fabrication du siège et des moyens de fixation. Les zones de fixation permettent ainsi de compenser les tolérances dimensionnelles dans les deux directions, ce qui est particulièrement intéressant. Les zones de fixation assurent les deux fonctions de compensation des tolérances dimensionnelles.

Un second aspect de l'invention est un siège pour véhicule comportant au moins une glissière selon le premier aspect de l'invention.

Un dernier aspect de l'invention est un véhicule automobile comportant au moins une glissière selon le premier aspect de l'invention.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 déjà décrite, représente une glissière classique, vue de dessus ;
- la figure 2 déjà décrite, représente la glissière de la figure 1, vue de face, selon la coupe 2-2 ;
- la figure 3 représente une glissière selon l'invention, vue de dessus ;
- la figure 4, représente la glissière de la figure 3, vue de face selon la coupe 4-4 ;
- la figure 5 représente la glissière de la figure 3, vue de côté ;

La figure 3 représente la partie fixée au véhicule d'une glissière 50 selon un mode de réalisation de l'invention, vue de dessus. Deux trous de fixation 55 sont ménagés à chaque extrémité de la glissière 50, dans des zones de fixation 60. Ces zones de fixation 60 sont agencées hors de la partie profilée 65 de la glissière 50.

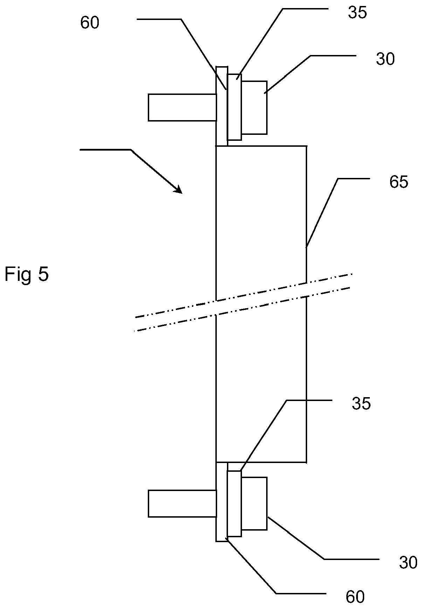

La coupe 4-4 de la figure 3 représente la partie fixée au véhicule de la glissière 50, vue de face. Une vis de fixation 30 est représentée, éventuellement avec une rondelle d'appui 35. On voit que le passage de la tête de la vis 30 n'est pas limité par le profil de la glissière 50, car le trou 55 de passage de la vis 30 est implanté hors de la partie profilée (voir la figure 5 à cet effet). Ainsi, le diamètre du trou 55 de passage de la vis 30 de fixation peut être augmenté pour permettre la compensation des tolérances dimensionnelles de fabrication, transversalement à l'axe de translation de la glissière. De plus, du fait que la zone de fixation 60 est située en dehors de la partie profilée 65, le débattement de la tête de la vis 30, transversalement à l'axe de translation de la glissière 50, est possible, malgré la compensation des tolérances de fabrication du siège, de la glissière et de la caisse du véhicule.

La figure 5 représente la partie fixée au véhicule de la glissière 50, vue de côté. Les deux zones de fixations 60 sont situées à chaque extrémité de la partie de la glissière 50 fixée au véhicule. Les vis 30 sont situées hors des parties profilées 65, permettant ainsi le débattement des têtes de vis causé part la compensation des tolérances de fabrication du siège, des glissières et de la caisse du véhicule.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à une fixation par vis de la glissière sur le véhicule, mais il peut être envisagé une fixation par rivets ou par soudure.

## Revendications

1. Glissière (50) pour siège de véhicule définissant un axe de translation (20), apte à être fixée sur un plancher de véhicule à l'aide de moyens de fixation et comportant des zones de fixation (60) coopérant avec lesdits moyens de fixation, dans laquelle les zones de fixation (60) sont dimensionnées et agencées pour compenser, transversalement à l'axe de translation (20) de la glissière (50), les tolérances dimensionnelles de fabrication du siège et desdits moyens de fixation, et pour permettre la coopération desdits moyens de fixation avec la glissière (50), transversalement à l'axe de translation (20) de la glissière (50), **caractérisée en ce que** les zones de fixation (60) de la glissière (50) sont des zones planes situées en dehors des zones profilées (65) de la glissière (50), et les zones de fixation étant à la même hauteur que le fond de la glissière et **en ce que** la partie de la glissière fixée au véhicule est fabriquée à partir d'un flan de tôle et les zones de fixation (60) étant obtenues directement à partir du flan de tôle utilisé pour fabriquer la partie de la glissière (50) fixée au véhicule.

2. Glissière (50) pour siège de véhicule selon la revendication 1, **caractérisée en ce que** les moyens de fixation sont des vis (30) et des écrous, **en ce que** les zones de fixation (60) comportent au moins deux trous (55) permettant la fixation par lesdites vis (30) et agencés pour être en regard des écrous de fixation implantés à des positions prédéterminées sur le plancher du véhicule, **en ce que** les trous (55) de fixation sont dimensionnés pour compenser, transversalement à l'axe de translation (20) de la glissière (50), les tolérances dimensionnelles de fabrication du siège et de positionnement desdits écrous, et **en ce que** les zones de fixation (60) de la glissière (50) permettent le débattement, transversalement à l'axe de translation (20) de la glissière (50), des têtes des vis (30) de fixation provoqué par les tolérances dimensionnelles de fabrication du siège et de positionnement desdits écrous.

3. Glissière (50) pour siège de véhicule selon l'une des revendications 1 ou 2, **caractérisée en ce que** les zones de fixation (60) sont dimensionnées et agencées pour compenser dans la direction de l'axe de translation (20) de la glissière les tolérances dimensionnelles de fabrication du siège et des moyens de fixation.

4. Siège pour véhicule comportant au moins une glissière selon l'une des revendications 1 à 3.

5. Véhicule automobile comportant au moins une glissière selon l'une des revendications 1 à 3 fixée sur le plancher du véhicule.

## Patentansprüche

1. Gleitschiene (50) für einen Fahrzeugsitz, eine Translationsachse (20) definierend, die imstande ist, mithilfe von Befestigungsmitteln auf einem Fahrzeugboden befestigt zu werden, und Befestigungszonen (60) umfassend, die mit den besagten Befestigungsmitteln zusammenwirken, wobei die Befestigungszonen (60) bemessen und angeordnet sind, um quer zur Translationsachse (20) der Gleitschiene (50) die Herstellungsmaßtoleranzen des Sitzes und der besagten Befestigungsmittel zu kompensieren, und um das Zusammenwirken der besagten Befestigungsmittel mit der Gleitschiene (50) quer zur Translationsachse (20) der Gleitschiene (50) zu ermöglichen, **dadurch gekennzeichnet, dass** die Befestigungszonen (60) der Gleitschiene (50) ebene Zonen sind, die sich außerhalb der profilierten Zonen (65) der Gleitschiene (50) befinden, und die Befestigungszonen auf derselben Höhe sind, wie der Boden der Gleitschiene, und dadurch, dass der Teil der Gleitschiene, der am Fahrzeug befestigt ist, aus einem Blechzuschnitt hergestellt wird, und man die Befestigungszonen (60) direkt aus dem Blechzuschnitt erhält, der verwendet wird, um den Teil der Gleitschiene (50) herzustellen, der am Fahrzeug befestigt ist.

2. Gleitschiene (50) für einen Fahrzeugsitz nach Anspruch 1, **dadurch gekennzeichnet, dass** die Befestigungsmittel Schrauben (30) und Muttern sind, dadurch, dass die Befestigungszonen (60) zumindest zwei Löcher (55) umfassen, welche die Befestigung durch die besagten Schrauben (30) ermöglichen, und angeordnet sind, um sich gegenüber den Befestigungsmuttern zu befinden, die an vorbestimmten Positionen am Boden des Fahrzeugs angeordnet sind, und dadurch, dass die Löcher (55) zur Befestigung bemessen sind, um quer zur Translationsachse (20) der Gleitschiene (50) die Herstellungsmaßtoleranzen des Sitzes und der Positionierung der besagten Muttern zu kompensieren, und dadurch dass die Befestigungszonen (60) der Gleitschiene (50) die Ausfederung quer zur Translationsachse (20) der Gleitschiene (50) der Köpfe der Befestigungsschrauben (30) ermöglichen, die durch die Herstellungsmaßtoleranzen des Sitzes und der Positionierung der besagten Muttern hervorgerufen wird.

3. Gleitschiene (50) für einen Fahrzeugsitz nach einem der Ansprüche 1 oder 2, **dadurch gekennzeichnet, dass** die Befestigungszonen (60) bemessen und angeordnet sind, um in der Richtung der Translationsachse (20) der Gleitschiene die Herstellungsmaßtoleranzen des Sitzes und der Befestigungsmittel zu kompensieren.

4. Fahrzeugsitz, zumindest eine Gleitschiene nach einem der Ansprüche 1 bis 3 umfassend.

5. Kraftfahrzeug, zumindest eine Gleitschiene nach einem der Ansprüche 1 bis 3 umfassend, die auf dem Boden des Fahrzeugs befestigt ist.

## Claims

1. Runner (50) for a vehicle seat, defining a translation axis (20), able to be fixed to a vehicle floor by fixing means and comprising fixing zones (60) cooperating with said fixing means, in which the fixing zones (60) are sized and arranged so as to compensate, transversely to the translation axis (20) of the runner (50), for the dimensional manufacturing tolerances of the seat and of said fixing means, and to allow cooperation of said fixing means with the runner (50), transversely to the translation axis (20) of the runner (50), **characterised in that** the zones (60) for fixing the runner (50) are planar zones situated outside the profiled zones (65) of the runner (50), and the fixing zones being at the same height as the bottom of the runner, and **in that** the part of the runner fixed to the vehicle is manufactured from a sheet-metal blank and the fixing zones (60) being obtained directly from the sheet-metal blank used for manufacturing the part of the runner (50) fixed to the vehicle.

2. Runner (50) for a vehicle seat according to claim 1, **characterised in that** the fixing means are screws (30) and nuts, and **in that** the fixing zones (60) comprise at least two holes (55) for fixing by said screws (30) and arranged so as to be opposite fixing nuts located at predetermined positions on the floor of the vehicle, **in that** the fixing holes (55) are sized so as to compensate, transversely to the translation axis (20) of the runner (50), for the dimensional tolerances involved in the manufacturing of the seat and the positioning of said nuts, and **in that** the fixing zones (60) of the runner (50) allow the movement, transversely to the translation axis (20) of the runner (50), of the heads of the fixing screws (30) caused by the dimensional tolerances involved in the manufacturing of the seat and the positioning of said nuts.

3. Runner (50) for a vehicle seat according to either claim 1 or 2, **characterised in that** the fixing zones (60) are sized and arranged so as to compensate, in the direction of the translation axis (20) of the runner, for the dimensional manufacturing tolerances of the seat and of the fixing means.

4. Seat for a motor vehicle, comprising at least one runner according to any of claims 1 to 3.

5. Motor vehicle comprising at least one runner according to any of claims 1 to 3 fixed to the floor of the vehicle.
